Europäisches Patentamt

European Patent Office

Office européen des brevets

(19)

(11) **EP 1 301 041 A1**

(12) **EUROPEAN PATENT APPLICATION**

(43) Date of publication:
**09.04.2003 Bulletin 2003/15**

(51) Int Cl.$^7$: **H04N 7/24**

(21) Application number: **01123873.0**

(22) Date of filing: **05.10.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **MATSUSHITA ELECTRIC INDUSTRIAL
CO., LTD.
Kadoma-shi, Osaka 571 (JP)**

(72) Inventors:
• **Rey, Jose,
  Panasonic European Laboratories GmbH
  63225 Langen (DE)**
• **Hakenberg, Rolf, c/o Panasonic European
  63225 Langen (DE)**

(74) Representative: **Grünecker, Kinkeldey,
Stockmair & Schwanhäusser Anwaltssozietät
Maximilianstrasse 58
80538 München (DE)**

(54) **Video data transmission method and apparatus**

(57) The invention provides an apparatus and method for transmitting video data to a video client. The video data is a series of video data units. A unique priority level is assigned to each video data unit that is to be transmitted. The video data units are then buffered, wherein a first part of the video data units have not yet been transmitted, and a second part of the video data units are available for retransmission. According to the invention, one of the buffered video data units is selected from the first and second parts, according to its priority level, and is transmitted to the video client. The invention allows for improving the video quality in particular when transmitting compressed video streams over unreliable links, by scheduling regular transmissions as well as retransmissions using priorities.

EP 1 301 041 A1

**EP 1 301 041 A1**

**Description**

The present invention relates to an apparatus and method for transmitting video data to a video client and is in particular applicable for compressed video streaming of e.g. MPEG-4 data over unreliable links such as wireless channels.

Generally, a video stream consists of a flow of bit packets called frames that contain information about the video picture itself as well as some meta information. The meta information includes for instance the time-to-send, i. e. the time at which the frame shall be sent, and the time-to-display, i.e. the time at which the frame shall be displayed.

The frames contain the video information in different formats, depending on the video compression. Some of these frames can be used independently while others dependent on the preceding frames. The independent frames are called intra-coded frames or I-frames, whereas the dependent frames are so-called predictive-coded frames or P-frames. These dependencies lead to a different importance of the frames. The importance of the P-frames decreases with the separation to the preceding I-frame.

Two main problems arise when transmitting real time video streams over unreliable links.

The first problem is that transmitting video frames over an unreliable channel leads to packet loss. Compressed video streams are however extremely susceptible to packet loss because of the inter-dependencies of the video frames.

For that reason, several mechanisms have been developed for reducing the packet loss and for compensating the consequences thereof. One common technique is to retransmit lost packets by simply signaling the loss of a packet from the receiver to the transmitter and letting the transmitter repeat the lost packets. This is called Automatic Repeat Request (ARQ).

The second problem that arises when transmitting real time video streams over unreliable links is a consequence of the delay requirements and/or limited bandwidth of the transport channel. All video frames have a time-to-send and a time-to-display value. Frames that are received after their time-to-display time, are of no use at the receiver. Thus, frames are sometimes delayed by the channel to an extent that they are useless.

To control the display times and cope with real time requirements, the Real-time Transport Protocol (RTP) was developed. This protocol adds some information such as time stamps and sequence numbers to the video frames that are encapsulated in RTP packets. This information is used to send the video frames at the scheduled time to the right video application. Some measurements such as delay jitter, simple loss statistics, etc can be carried out at the receiver, and the results are signaled to the source by means of the RTP control protocol (RTCP).

Considering the above-mentioned retransmission techniques, because of the delay requirements not all of the lost packets can be retransmitted. Further, as different data packets are of different importance, just simply retransmitting lost packets without any criterion would cause less important packets to block the transmission of other more important packets, leading to a decrease in the quality of the received video stream.

EP 1 130 839 A1 discloses a data transmission method and apparatus that improve the received quality by retransmitting the I-frames as well as a number of subsequent P-frames, with the number set according to the current channel conditions. That is, the disclosed technique does not limit the retransmission to the I-frames or to the I-frames and a fixed number of P-frames, but is adaptive to the channel conditions. This allows for more efficiently using the available channel bandwidth, but there are still limitations that would allow for even better improving the quality of the video streaming application while meeting the time requirements and channel bandwidth limitations.

It is therefore the object of the invention to provide an apparatus and a method for transmitting video data to a video client, efficiently using the available bandwidth and leading to improved video quality.

This object is solved by the invention as claimed in the independent claims.

According to the invention, a unique priority level is assigned to each video data unit, and the priority level is used for scheduling the data for transmission. The invention overcomes the limitations of the prior art by considering not only frames scheduled for retransmission but also frames scheduled for first, i.e. regular, transmission. Furthermore, the invention assigns unique priority levels to the data thereby avoiding that multiple data units have the same priority. This is advantageous because at any time it is clearly defined what data unit is to be scheduled for transmission.

According to the invention, the video data units that are available for transmission are selected (i.e. scheduled) according to their priority levels. This might lead to a situation where a less important frame is delayed or even discarded in favor of a more important frame, no matter of its position in the stream. This increases the probability to receive this more important frame as it increases the amount of time for possible retransmissions of this frame.

Further, the invention is advantageous in that it allows for efficiently handling the available bandwidth for both, regular transmissions and retransmissions. Regular transmissions and retransmissions share the same available bandwidth of the link. To which part the bandwidth is used by first time transmissions or by retransmissions is not fixed, but depends on the priority levels that are assigned to the data units, and on how many and which data units are requested for retransmission. By using the priority level assignment according to the invention, the channel is utilized in an optimum way.

Moreover, the invention is advantageous in that it takes into account that the quality of the received compressed video stream depends on the degree in which the video quality is kept constant, without sudden improvements or gradations of the actual seen video stream.

Preferred embodiments are defined in the dependent claims.

The assignment of a unique priority level is preferably done based on meta information of the video frame, e.g. the time-to-send, the time-to-display, the transmission delay, the importance or the type of compression, that is whether the frame is an I-frame or a P-frame. Through the use of this information and additional information on the current channel conditions, e.g. available bandwidth and receiver statistics, the invention allows for better deciding which frames are to be sent, re-sent or discarded.

Further, the invention provides a weighting algorithm that considers not only one single PDU but a weighting interval of multiple PDUs of multiple sequences (this will be discussed in more detail below). The weighting mechanism is advantageous since large fluctuations in the link quality do not result in large fluctuations of the quality of the received video stream.

The invention will now be described in more detail with reference to the accompanying drawings in which:

FIG. 1 is a block diagram illustrating the components of a video server and video client that are operating according to a preferred embodiment of the present invention;

FIG. 2 is a graph illustrating the priority level assignment within a sequence according to a preferred embodiment of the present invention; and

FIG. 3 is a graph illustrating the priority level assignment to data units of multiple sequences according to another preferred embodiment of the present invention.

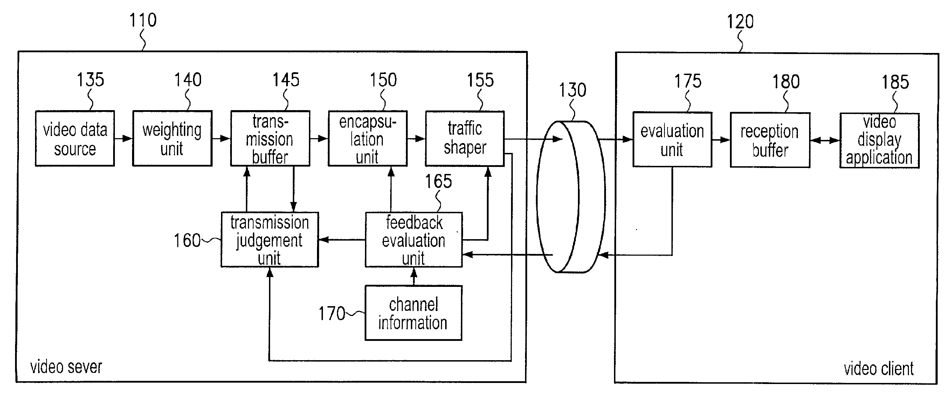

Referring now to FIG. 1, a video server 110 is depicted that is connected via an unreliable channel 130 to a video client 120. The channel 130 is considered unreliable whenever it produces a propagation delay and/or bit errors. Examples of unreliable channels are wireless links.

The video server 110 transmits video data through the channel 130 to the video client 120. The video information is provided in the form of frames or frame segments by the video data source 135 of the video server 110. The frames or the segments of a frame are encapsulated in Packet Data Units (PDU). A PDU may contain a single frame or a segment of a frame.

The PDUs are forwarded to the weighting unit 140 where a priority value, or weight, is assigned using some PDU meta information such as the expiration time, the type of compression and the sequence number of the PDU. The expiration time is the time at which a PDU can be sent at the latest, i.e. the time difference of time-to-display and channel propagation delay.

The PDUs are then stored in the transmission buffer 145. The transmission buffer 145 is controlled by a control unit (not shown) that manages the expiration times of each PDU in the transmission buffer 145 and deletes those PDUs that have been expired. The transmission buffer 145 is further controlled by the transmission judgment unit 160 that decides which PDU is to be sent, resent or discarded by selecting the respective PDU according to its priority level (or weight). Once the transmission judgment unit 160 has selected a PDU for (re)transmission, the PDU is forwarded to the encapsulation unit 150 that encapsulates the respective PDU into an RTP PDU by adding appropriate header information. The header information of the RTP PDU is different for transmissions and retransmissions.

The RTP PDU is then forwarded to the traffic shaper 155 which sends the RTP PDU at the bit rate given by the channel information block 170.

There are several possibilities for triggering the transmission judgment unit 160 to select the highest priority PDU in the transmission buffer 145.

One possibility is that the transmission judgment unit 160 is triggered by the feedback evaluation unit 165 that receives and evaluates any feedback that is received from the video client 120. The feedback from the video client 120 may include a request for retransmissions or an acknowledgment indicating that a PDU was received correctly. The video server 110 then has to decide whether to send a retransmission or whether to delete frames from the transmission buffer 145 that have been acknowledged.

Another possibility of triggering the transmission judgment unit 160 is to use a control signal from the traffic shaper 155. The traffic shaper 155 signals the completion of each PDU transmission to the transmission judgment unit 160, indicating that the video server 110 is now ready to continue sending PDUs from the transmission buffer 145.

A further possibility is that the transmission judgment unit 160 is triggered by the transmission buffer 145 itself. When the transmission buffer 145 is empty, any incoming PDU can be immediately transmitted.

While three different possibilities of how to trigger the transmission judgment unit 160 have been described, it will be apparent to those of ordinary skill in the art that other possibilities might exist. Further, it is apparent that more than one triggering scheme can be employed simultaneously.

At the receiving side, PDUs are received that have undergone propagation delay and bit errors by passing the unreliable channel 130. In the evaluation unit 175, the header information of each received RTP PDU is evaluated, the receiving statistics are updated and, if needed, retransmission requests and acknowledgments are generated. The generated messages include ACK (acknowledgment), NACK (non-acknowledgment) or MACK (multi-purpose acknowledgment) message and are transmitted back to the video server 110.

The evaluated PDUs are then forwarded to the reception buffer 180 where the header is stripped off and the frame is stored. The video display application 185 will then manage to release the frames from the reception buffer 180 according to the display times and carry on the actual display of the video information.

According to the invention, each PDU is assigned a unique priority level. For this purpose, each frame of a sequence is classified into one of several priority groups, or classes. A sequence is a series of frames starting with an I-frame and further incorporating all P-frames that depend on this I-frame. Frames or segments of a frame are encapsulated in PDUs. Each PDU is then assigned a unique weight (priority) that depends on its priority group.

A priority group is a group of PDUs that belong to certain types of frames. In the present embodiment, three priority groups (or types of frames) are distinguished:

I-frames (I), more important P-frames ($P_m$) and less important P-frames ($P_l$). The weights of the PDUs that belong to the different priority groups are calculated according to the following equations:

$$\hat{w}_I = w_{max} - G \cdot D \cdot SQN$$

$$\hat{w}_{Pm} = \hat{w}_I - D \cdot (1 + G \cdot L)$$

$$\hat{w}_{Pl} = \hat{w}_{Pm} - D \cdot (1 + G) = \hat{w}_I - 2 \cdot D - D \cdot G \cdot (1 + L)$$

In these equations, $G$ denotes the number of priority groups, i.e. $G = 3$ in the present embodiment.

$D$ is the maximum number of PDUs in the groups:

$$D = \max\{I_{max}, P_{m\_max}, P_{l\_max}\}$$

where $I_{max}$ is the maximum number of PDUs in the I-frame priority group, $P_{m\_max}$ the maximum number of PDUs in the more important P-frame priority group, and $P_{l\_max}$ is the maximum number of PDUs in the less important P-frame priority group. These numbers are measured per sequence for all sequences.

$SQN$ is the number of a sequence. As stated above a sequence is a series of PDUs starting with an I-frame and further including all P-frames that depend on this I-frame.

Finally, the parameter $L$ is a value indicating the length of the weighting interval. The weighting interval will be explained in more detail below.

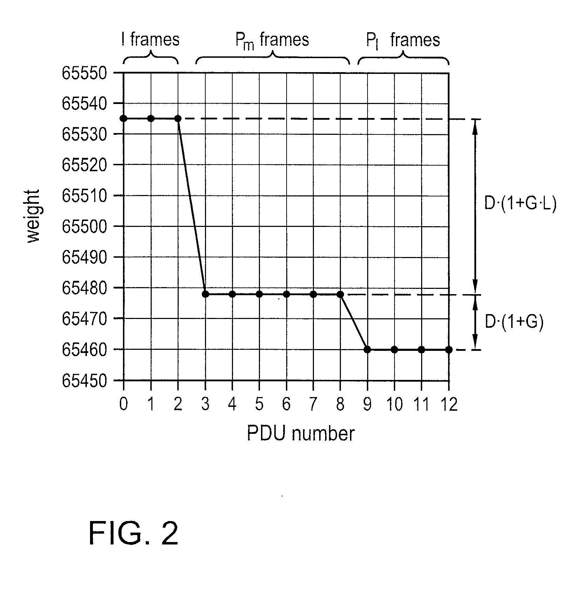

Referring now to FIG. 2, the graph illustrates, in an example, the dependencies of the above shown equations. The graph of FIG. 2 is given for explanatory reasons only, to illustrate the concept of providing priority groups.

As the non-fragmented frames happen to be very large, they are fragmented to achieve smaller PDU sizes for efficient transmission. Additionally, the fragmentation is used to obtain substantially constant PDU sizes, as far as this is possible. Considering all sequences, I-frames are segmented to a maximum of three PDUs, $P_m$-frames are segmented to a maximum two PDUs and $P_l$-frames are also divided to a maximum of two PDUs.

In the example of FIG. 2, a video stream includes in each sequence one I-frame and five successive P-frames. The first three of the five P-frames belong to the more important P-frame priority $P_m$, and the remaining two P-frames belong to the less important P-frame priority group $P_l$.

This results to the following maximum number of PDUs in each priority group:

$$I_{max} = 3 \cdot 1 = 3$$

$$P_{m\_max} = 2 \cdot 3 = 6$$

$$P_{I\_max} = 2 \cdot 2 = 4$$

Thus, by applying the equation that defines the $D$ parameter, the maximum number of PDUs for all priority groups is $D = 6$ in the present example.

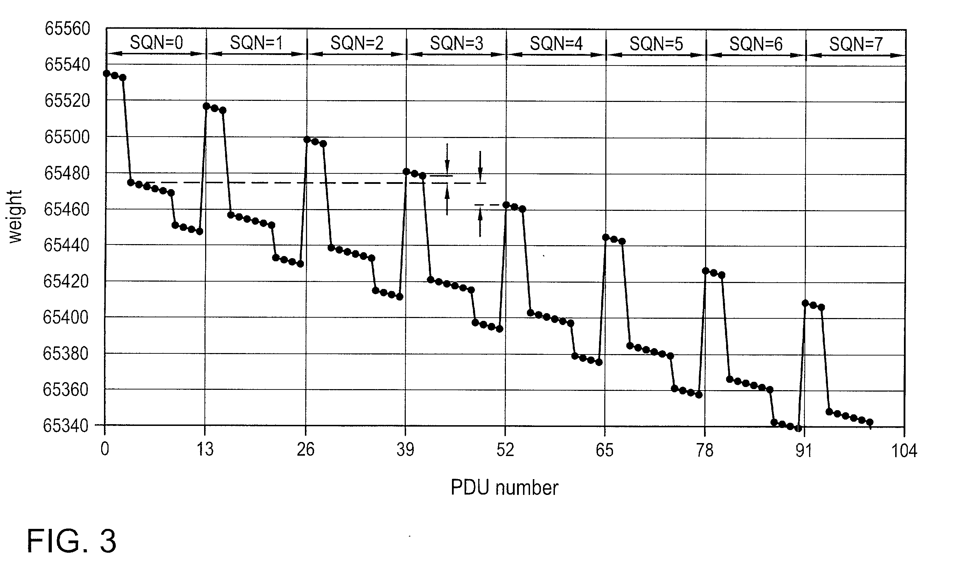

In FIG. 2 the PDUs in each priority group are shown to have the same weight i.e. priority level. It will however be appreciated by those of ordinary skill in the art that it is rather preferred that each PDU has its unique weight. A preferred embodiment of the invention will therefore now be discussed in more detail with reference to FIG. 3.

In this example, the priority values of each PDUs in a number of subsequent sequences are shown to gradually decrease. In the example of FIG. 3, the maximum weight $w_{max}$ is set to a constant value of 65,535 which corresponds to a 16bit address. The individual priority values are then assigned according to the following equations:

$$w_I = \hat{w}_I - PN$$

$$w_{Pm} = \hat{w}_{Pm} - PN$$

$$w_{Pl} = \hat{w}_{Pl} - PN$$

In these equations, the parameter $PN$ denotes the number of a PDU in a priority group. At the beginning of each priority group, this number is zero. By applying these equations, the priority levels that are assigned to the PDUs in each sequence are:

| PDU | SEQ=0 | SEQ=1 | SEQ=2 | SEQ=3 | SEQ=4 | SEQ=5 | SEQ=6 | SEQ=7 | SEQ=8 |
|---|---|---|---|---|---|---|---|---|---|
| 0 | 65535 | 65517 | 65499 | 65481 | 65463 | 65445 | 65427 | 65409 | 65391 |
| 1 | 65534 | 65516 | 65498 | 65480 | 65462 | 65444 | 65426 | 65408 | 65390 |
| 2 | 65533 | 65515 | 65497 | 65479 | 65461 | 65443 | 65425 | 65407 | 65389 |
| 3 | 65475 | 65457 | 65439 | 65421 | 65403 | 65385 | 65367 | 65349 | 65385 |
| 4 | 65474 | 65456 | 65438 | 65420 | 65402 | 65384 | 65366 | 65348 | 65384 |
| 5 | 65473 | 65455 | 65437 | 65419 | 65401 | 65383 | 65365 | 65347 | 65383 |
| 6 | 65472 | 65454 | 65436 | 65418 | 65400 | 65382 | 65364 | 65346 | 65382 |
| 7 | 65471 | 65453 | 65435 | 65417 | 65399 | 65381 | 65363 | 65345 | 65381 |
| 8 | 65470 | 65452 | 65434 | 65416 | 65398 | 65380 | 65362 | 65344 | 65380 |
| 9 | 65451 | 65433 | 65415 | 65397 | 65379 | 65361 | 65343 | 65325 | 65379 |
| 10 | 65450 | 65432 | 65414 | 65396 | 65378 | 65360 | 65342 | 65324 | 65378 |
| 11 | 65449 | 65431 | 65413 | 65395 | 65377 | 65359 | 65341 | 65323 | 65377 |
| 12 | 65448 | 65430 | 65412 | 65394 | 65376 | 65358 | 65340 | 65322 | 65376 |

The priority level assignment according to the invention is intended for giving lower weights to less important PDUs to the benefit of the more important ones. Assuming that for each sequence the PDUs of this sequence expire after five subsequent sequences, the expiration time is set to a value that corresponds to the length of five sequences. For instance, the PDUs of the first sequence ($SQN = 0$) expire before the sixth sequence ($SQN = 5$) starts. In the present embodiment, the PDUs of the $P_m$ frame in the first sequence are made less important than all the I-frame PDUs of the first to fourth sequences. This is shown in FIG. 3 by means of the horizontal dashed line.

This interval of sequences will be called weighting interval in the following description. The weighting interval is therefore the interval in which the PDUs of the more important $P_m$-frames of sequence m have a lower weight than all I-frame PDUs of sequences $m$ to $m+L$. In the example of FIG. 3, $m = 0$ and $L = 3$. The length of the weighting interval, i.e. the number of sequences in the interval, is given by $L+1$, i.e. 4 in the example of FIG. 3.

The weighting interval can also be described for the PDUs of the less important $P_l$ frames. Since in the example of FIG. 3 the $P_l$-frame PDUs of the first sequence ($SQN = 0$) have assigned lower weights than the I-frame PDUs of the fifth sequence ($SQN = 4$) but higher weights that the I-frame PDUs of the sixth sequence ($SQN = 5$), the length of the weighting interval for the less important $P_l$-frame PDUs is equal $L+2$, thus exceeding the weighting interval length of the more important $P_m$-frame PDUs by one sequence.

By using the weighting intervals as described above, the number of times that an I-frame PDU can be retransmitted before expiring is increased so that the probability of receiving the I-frame is also increased. This leads to transmissions or retransmissions of $P_m$-frame PDUs being delayed or discarded in favor of I-frame PDU transmissions or retransmissions for a period of time that corresponds to $L+1$ sequences. Transmissions or retransmissions of $P_m$-frame PDUs of the first sequence do therefore not have highest priority up to the I-frame PDUs of the fourth sequence and these have time only up to their expiration, i.e. start of the sixth sequence, to be successfully transmitted. The same applies to the $P_l$-frame PDUs although they have less time to be successfully transmitted or retransmitted to the receiver, as they are less important.

According to a preferred embodiment of the invention, the length of the weighting interval is set according to the expiration time and the time-to-send of the PDU. For example, the parameter $L$ can be calculated based on the expiration time $t_{exp}$, the time-to-send $t_{send}$, the sequence duration $T_{seq}$, and the number of priority groups $G$:

$$L = \frac{t_{exp} - t_{send}}{T_{seq}} - G + 1$$

The value of $T_{seq}$ denotes the duration of a sequence and is assumed to be fixed for all sequences.

**Claims**

1. Apparatus for transmitting video data to a video client (120), said video data being a series of video data units, the apparatus comprising:

   a priority assignment unit (140) for assigning a unique priority level to each video data unit to be transmitted;

   a transmission buffer (145) for buffering a plurality of video data units each having assigned a priority level, a first part of said plurality of video data units including video data units that have not yet been transmitted, a second part of said plurality of video data units including video data units that are available for retransmission;

   a transmission judgement unit (160) for selecting, from said first and second parts, one of the buffered video data units according to its priority level;

   transmission means (150, 155) for transmitting the selected video data unit to the video client.

2. The apparatus according to claim 1, wherein said video data units are packet datagram units (PDU).

3. The apparatus according to claim 1, wherein said video data is transmitted in a video stream including intra-coded (I) and predictive-coded (P) frames, and said video data units are I- or P frames or segments thereof.

4. The apparatus according to one of claims 1 to 3, further comprising a feedback evaluation unit (165) for receiving feedback messages from the video client (120) and operating said transmission judgment unit (160) for performing retransmissions of video data units, wherein said transmission judgment unit is arranged for selecting said one of the buffered data units independently on whether the data unit is to be transmitted the first time or is to be retransmitted.

5. The apparatus according to one of claims 1 to 4, wherein said priority assignment unit is arranged for assigning said unique priority level in accordance with the time-to-send and/or time-to-display and/or transmission delay of the respective video data unit.

6. The apparatus according to one of claims 1 to 5, wherein said transmission judgment unit is triggered to select the video data unit in response to an acknowledgment or non-acknowledgment message from the video client.

7. The apparatus according to one of claims 1 to 6, wherein said transmission judgment unit is triggered to select the video data unit whenever said transmission means indicates that one of the previously selected video data units has been transmitted.

8. The apparatus according to one of claims 1 to 7, wherein said transmission judgment unit is triggered to select the video data unit whenever said transmission buffer was empty and receives its first video data unit.

9. The apparatus according to one of claims 1 to 8, wherein said video data is transmitted in a video stream including intra-coded (I) frames and predictive-coded (P) frames, and the P-frames are classified into at least two different priority classes.

10. The apparatus according to claim 9, wherein the priority levels assigned to the I-frames and the priority levels assigned to the P-frames of one of the priority classes differ by an amount that depends on the overall maximum number (D) of packet datagram units (PDU) in the priority class, and/or on the number (G) of priority classes.

11. The apparatus according to claim 9 or 10 wherein the priority levels assigned to the P-frames of one priority class and the priority levels assigned to the P-frames of another priority class differ by an amount that depends on the overall maximum number (D) of packet datagram units (PDU) in the priority class, and/or on the number (G) of priority classes.

12. The apparatus according to one of claims 1 to 11, wherein said video data units are arranged in sequences, and said priority assignment unit is arranged for assigning the priority levels to the video data units such that the priority levels gradually decrease from sequence to sequence.

13. The apparatus according to claim 12, wherein said video data is transmitted in a video stream including intra-coded (I) frames and predictive-coded (P) frames, and the difference of the I-frame priority levels and the P-frame priority levels depend on a parameter that indicates the length of a weighting interval, wherein said weighting interval is a group of several sequences in which the P-frame video data units of the first sequence in the weighting interval have a lower priority level than the I-frame video data units of the last sequence in the weighting interval.

14. Method of transmitting video data to a video client (120), said video data being a series of video data units, the method comprising the steps of:

   assigning a unique priority level to each video data unit to be transmitted;

   buffering one or more video data units each having assigned a priority level, wherein a first part of the video data units have not yet been transmitted, and a second part of the video data units are available for retransmission;

   selecting one of the buffered video data units from the first and second parts according to its priority level; and

   transmitting the selected video data unit to the video client.

15. The method according to claim 14, arranged for being performed by the apparatus according to one of claims 1 to 13.

FIG. 2

FIG. 3

## EUROPEAN SEARCH REPORT

**European Patent Office**

Application Number

EP 01 12 3873

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 130 839 A (MATSUSHITA ELECTRIC IND CO LTD) 5 September 2001 (2001-09-05) * abstract * * column 2, line 6 - column 3, line 37 * * column 6, line 13 - line 44 * | 1-9,14, 15 | H04N7/24 |
| A | * figures 2,3 * | 10-13 | |
| X | EP 1 006 689 A (MATSUSHITA ELECTRIC IND CO LTD) 7 June 2000 (2000-06-07) * abstract * * column 17, line 50 - column 19, line 37 * * column 20, line 33 - line 51 * * column 21, line 46 - column 22, line 15 * | 1-9,14, 15 | |
| A | * figure 4 * | 10-13 | |
| A | WO 00 72498 A (BROADCOM HOMENETWORKING INC ;MALLORY TRACY D (US)) 30 November 2000 (2000-11-30) * abstract * * page 11, line 4 - line 18 * * page 15, line 16 - page 16, line 2 * * page 16, line 19 - line 28 * | 1-13 | |
| A | MIYAZAKI A ET AL: "RTP PAYLOAD TYPE FORMAT TO ENABLE SELECTIVE RETRANSMISSIONS" AUDIO/VIDEO TRANSPORT WORKING GROUP. INTERNET DRAFT, XX, XX, September 2000 (2000-09), pages 1-14, XP002930792 * the whole document * | 1-13 | |

**TECHNICAL FIELDS SEARCHED (Int.Cl.7)**

H04N
H04L

The present search report has been drawn up for all claims

| Place of search | Date of completion of the search | Examiner |
|---|---|---|
| THE HAGUE | 20 February 2002 | Fantini, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 301 041 A1**

ANNEX TO THE EUROPEAN SEARCH REPORT
ON EUROPEAN PATENT APPLICATION NO.

EP 01 12 3873

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2002

| Patent document cited in search report | | Publication date | Patent family member(s) | | Publication date |
|---|---|---|---|---|---|
| EP 1130839 | A | 05-09-2001 | EP | 1130839 A1 | 05-09-2001 |
| | | | JP | 2001274861 A | 05-10-2001 |
| | | | US | 2002004838 A1 | 10-01-2002 |
| EP 1006689 | A | 07-06-2000 | EP | 1006689 A2 | 07-06-2000 |
| | | | JP | 2001119437 A | 27-04-2001 |
| WO 0072498 | A | 30-11-2000 | US | 6335933 B1 | 01-01-2002 |
| | | | AU | 4857600 A | 12-12-2000 |
| | | | WO | 0072498 A1 | 30-11-2000 |

EPO FORM P0459

For more details about this annex : see Official Journal of the European Patent Office, No. 12/82

12